# EUROPÄISCHE PATENTSCHRIFT

(11) **EP 1 369 573 B1**
(45) Veröffentlichungstag und Bekanntmachung des Hinweises auf die Patenterteilung: **14.06.2006**
(21) Anmeldenummer: 03007254.0
(22) Anmeldetag: 31.03.2003
(51) Int. Cl.: F02D 41/38, F02D 41/40

(54) **Verfahren zum Betreiben eines Kraftstoffeinspritzsystems für Brennkraftmaschinen**
Method for operating a fuel injection system for internal combustion engines
Procédé pour faire fonctionner un système d'injection de carburant pour moteurs à combustion interne

(30) Priorität: 05.06.2002 DE 10224813
(43) Veröffentlichungstag der Anmeldung: 10.12.2003
(73) Patentinhaber: ROBERT BOSCH GMBH, 70442 Stuttgart (DE)
(72) Erfinder: Frenz, Thomas, 86720 Noerdlingen (DE); Schumacher, Matthias, 71679 Asperg (DE); Mueller, Uwe, 71282 Hemmingen (DE); Wiedmann, Christian, 71642 Ludwigsburg (DE)

(56) Entgegenhaltungen:
- EP-A- 0 481 964
- EP-A- 0 802 322
- DE-A1- 10 023 227
- DE-A1- 19 912 966

## Beschreibung

### Stand der Technik

Die Erfindung betrifft ein Verfahren zum Betreiben einer Brennkraftmaschine mit einer Hochdruckpumpe, mit einem Mengensteuerventil zur Steuerung der Fördermenge der Hochdruckpume, mit einem Common-Rail, mit mindestens zwei Einspritzventilen und mit einem Steuergerät zur Ansteuerung des Mengensteuerventils und der Einspritzventile.

Des Weiteren betrifft die Erfindung ein Computerprogramm sowie ein Steuergerät nach den nebengeordneten Ansprüchen 6 und 7.

Aus der DE 199 12 966 A1 ist ein Kraftstoffeinspritzsystem bekannt, bei dem der Druck im Common-Rail durch eine geeignete Steuerung des Mengensteuerventils erfolgt. Das Mengensteuerventil ist auf der Saugseite der Hochdruckpumpe angeordnet. Solange das Mengensteuerventil geöffnet ist, kann die Hochdruckpumpe Kraftstoff ansaugen, dessen Druck erhöhen und anschließend in den Common-Rail fördern. Zur Regelung des Drucks im Common-Rail wird das Mengensteuerventil so angesteuert, dass die Hochdruckpumpe gerade so viel Kraftstoff in das Common-Rail fördert wie zur Erzielung des gewünschten Drucks im Common-Rail notwendig ist. Bei der in der DE 199 12 966 A1 beschriebenen Kraftstoffeinspritzanlage werden die Injektoren, welche über den Common-Rail mit Kraftstoff versorgt werden, gleichzeitig mit dem Mengensteuerventil angesteuert.

### Vorteile der Erfindung

Durch das erfindungsgemäße Verfahren, bei welchem Beginn und Ende einer Einspritzung in Abhängigkeit des Betriebszustands der Brennkraftmaschine und der Lastanforderung berechnet wird, die Dauer einer Förderphase der Hochdruckpumpe berechnet wird und das Mengensteuerventil so angesteuert wird, dass die Förderphase der Hochdruckpumpe symmetrisch zu Beginn und Ende einer Einspritzung angeordnet ist , wird erreicht, dass der Druck im Common-Rail zu den Zeitpunkten, an denen die verschiedenen Injektoren vom Steuergerät geöffnet und geschlossen werden, nahezu gleich ist, so dass die Einspritzmengen der verschiedenen Injektoren einer geringeren Streuung unterliegen. In anderen Worten: Der mittlere Druck im Common-Rail während der Öffnung der Injektoren wird durch das erfindungsgemäße Verfahren vergleichmäßigt.

Dadurch erhöht sich die Laufruhe der Brennkraftmaschine und das Emissions- und Verbrauchsverhalten der Brennkraftmaschine wird verbessert. Dabei macht sich die Erfindung die Abhängigkeit der Einspritzmenge vom Druck im Common-Rail zunutze. Je gleichmäßiger der zeitlich gemittelte Druck im Common-Rail ist während der Einspritzung in den verschiedenen Injektoren des Kraftstoffeinspritzsystems, desto geringer sind die Unterschiede der von den verschiedenen Injektoren eingespritzten Kraftstoffmengen. Das erfindungsgemäße Verfahren kann sowohl bei saugseitig als auch bei förderseitig geregelten Hochdruckpumpen angewandt werden.

Da das erfindungsgemäße Verfahren keine Änderungen der Kraftstoffeinspritzanlage erfordert, kann es ohne Mehrkosten durch eine geeignete Umprogrammierung des Steuergeräts angewendet werden.

Es hat sich durch Simulationsrechnungen und anhand realer Brennkraftmaschinen nachweisen lassen, dass die Unterschiede der zwischen den Einspritzmengen verschiedener Injektoren bei ansonsten gleichen Bedingungen von 2,9 % innerhalb eines Arbeitspiels der Brennkraftmaschine ohne Anwendung des erfindungsgemäßen Verfahrens auf 1,8 % bei Anwendung des erfindungsgemäßen Verfahrens verringert werden konnte. Dadurch ist auch die Wirksamkeit und Effektivität des erfindungsgemäßen Verfahrens nachgewiesen worden.

In weiterer Ergänzung des erfindungsgemäßen Verfahrens ist vorgesehen, dass die Dauer der Förderphase aus der Dauer der Bestromung des Mengensteuerventils abzüglich der Anzugsdauer des Mengensteuerventils und der Dauer der Kompressionsphase der Hochdruckpumpe ermittelt wird. Durch diese Art der Berechnung der Dauer der Förderphase ist ebenfalls kein zusätzlicher Aufwand erforderlich, da die Anzugsdauer des Mengensteuerventils und die Dauer der Kompressionsphase der Hochdruckpumpe in Abhängigkeit der Drehzahl der Brennkraftmaschine und des Drucks im Common-Rail aus einem Kennfeld ausgelesen werden können. Dieses Kennfeld ist in jedem Steuergerät für Brennkraftmaschinen der eingangs genannten Art vorhanden, da dieses Kennfeld auch für andere Steuerungsaufgaben benötigt wird.

In weiterer Ergänzung des erfindungsgemäßen Verfahrens kann vorgesehen sein, dass die Hochdruckpumpe mehrere Förderphasen während eines Arbeitsspiels der Brennkraftmaschine hat und dass die mehreren Förderphasen um einen oder mehrere Zündabstände der Brennkraftmaschine zueinander versetzt sind. Unter einem Arbeitsspiel einer nach dem Viertakt-Verfahren arbeitenden Brennkraftmaschine wird im Zusammenhang mit der Erfindung ein Kurbelwinkel von 720 ° verstanden, da innerhalb dieses Kurbelwinkels die vier Takte einer Brennkraftmaschine (Ansaugen, Verdichten, Arbeiten und Ausstoßen) ablaufen. Wenn die mehreren Förderphasen in erfindungsgemäßer Weise zueinander versetzt sind, ergibt sich dadurch eine weitere Vergleichmäßigung des Drucks im Common-Rail, da die von der Hochdruckpumpe geförderte Kraftstoffmenge in zwei oder mehreren Portionen in den Common-Rail gefördert wird. Prinzipiell wäre es wünschenswert, die Zahl der Förderphasen so groß wie die Zahl der Zylinder der Brennkraftmaschine zu machen, allerdings setzen die Schaltzeiten des Mengensteuerventils Grenzen bezüglich der Zahl der Förderphasen. Es hat sich in der Praxis als vorteilhaft erwiesen, wenn zwei Förderphasen pro Arbeitsspiel vorgesehen werden für Brennkraftmaschinen mit 4 Zylindern, bzw. 3 Förderphasen für Brennkraftmaschinen mit 6 Zylindern.

Es hat sich auch als vorteilhaft erwiesen, wenn die mehreren Förderphasen einen gleichmäßigen Abstand voneinander haben. Dies ist insbesondere bei Brennkraftmaschinen mit einer ungeraden Zylinderzahl, wie z. B. einer 5-Zylinder-Brennkraftmaschine, von Vorteil.

Weitere Vorteile und vorteilhafte Ausgestaltungen der Erfindung sind der nachfolgenden Zeichnung, deren Beschreibung und den Patentansprüchen entnehmbar.

### Zeichnung

Es zeigen:
- Figur 1: ein Blockschaltbild eines Kraftstoffeinspritzsystems mit Common-Rail und mehreren Injektoren,
- Figur 2: eine Darstellung des Druckverlaufs im Common-Rail, der Förderphasen der Hochdruckpumpe und des Einspritzzeitpunkts über ein Arbeitsspiel nach dem Stand der Technik in Diagrammform,
- Figur 3: die Darstellung gemäß Fig. 2 nach dem erfindungsgemäßen Verfahren und
- Figur 4: eine zeitliche Darstellung der Berechnung der Dauer der Förderphase der Hochdruckpumpe.

### Beschreibung der Ausführungsbeispiele

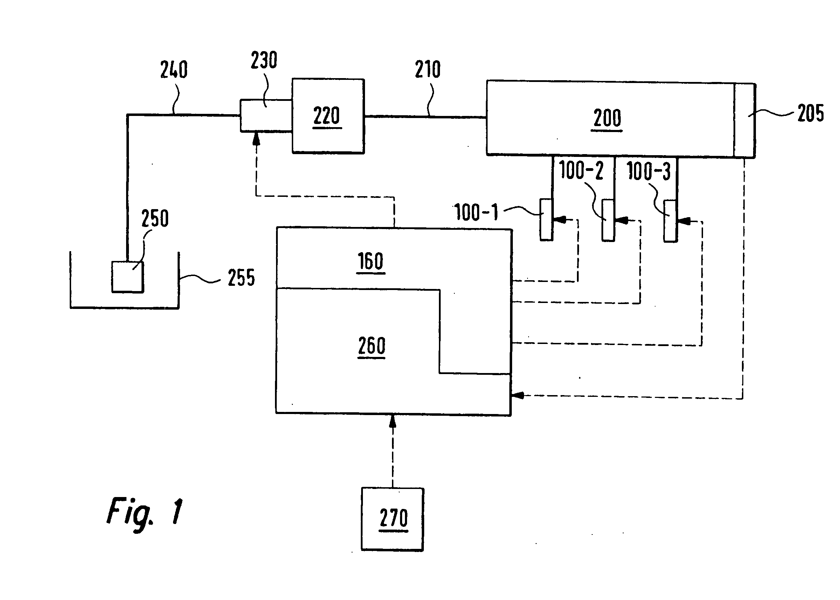

In Fig. 1 wird ein Kraftstoffeinspritzsystem für Brennkraftmaschinen schematisch dargestellt, anhand dessen das erfindungsgemäße Verfahren nachfolgend erläutert wird.

Mit 100 sind Injektoren bezeichnet, über die der Kraftstoff den einzelnen Brennräumen der nicht dargestellten Brennkraftmaschine zugemessen wird. Jeder Injektor 100 ist einem Zylinder der nicht dargestellten Brennkraftmaschine zugeordnet. In dem Ausführungsbeispiel gemäß Fig. 1 sind drei Injektoren 100 einer 3-Zylinder-Brennkraftmaschine dargestellt. Bei einer anderen Zylinderanzahl ändert sich die Zahl der Injektoren 100 entsprechend.

Die Injektoren werden von einem Druckspeicher, nachfolgend als "Common-Rail" bezeichnet, 200 mit Kraftstoff beaufschlagt. Der Common-Rail 200 steht über eine Leitung 210 mit einer Hochdruckpumpe 220 in Verbindung. Die Hochdruckpumpe 220 wiederum steht über eine Niederdruckleitung 240 mit einer Niederdruckpumpe 250, die meist als elektrische Kraftstoffpumpe ausgeführt wird, in Verbindung. Die Niederdruckpumpe 250 ist vorzugsweise in einem Kraftstofftank 255 angeordnet.

An dem Druckspeicher 200 ist ein Druckregelventil 205 angeordnet. Zwischen der Niederdruckpumpe 250 und der Hochdruckpumpe 220 ist ein Mengensteuerventil 230 angeordnet. Alternativ kann das Mengensteuerventil 230 auch zwischen der Hochdruckpumpe 220 und dem Common-rail 200 angeordnet sein (nicht dargestellt). Das Mengensteuerventil 230, die Injektoren 100 und ggf. das Druckregelventil 205 werden von einer Endstufe 160 mit Spannung beaufschlagt. Die Endstufe 160 ist vorzugsweise in ein Steuergerät 260 integriert, welche die Ausgangssignale verschiedener Sensoren 270 verarbeitet.

Das Kraftstoffeinspritzsystem arbeitet nun wie folgt: Die Niederdruckpumpe 250 fördert den Kraftstoff, der sich im Tank 255 befindet, über die Niederdruckleitung 240 zur Hochdruckpumpe 220. Diese verdichtet den Kraftstoff und fördert ihn über die Hochdruckleitung 210 in den Druckspeicher. Durch Ansteuern der Injektoren 100 kann der Beginn und das Ende der Einspritzung von Kraftstoff in einem bestimmten Zylinder gesteuert werden. Diese Steuerung erfolgt abhängig von den mit den Sensoren 270 erfassten Betriebskenngrößen der Brennkraftmaschine.

Mittels des Drucksensors 205 wird der im Druckspeicher 200 herrschende Kraftstoffdruck P erfasst und vorzugsweise in dem Steuergerät 260 im Sinne einer Druckregelung ausgewertet.

Das Mengensteuerventil 230 wird in Abhängigkeit der Abweichung des gemessenen Druckwertes P mit einem Sollwert angesteuert. Mittels des Mengensteuerventils 230 kann die von der Hochdruckpumpe 220 geförderte Kraftstoffmenge gesteuert und damit der Druckaufbau im Druckspeicher 200 gesteuert werden. Hierzu ist es erforderlich, dass das Mengensteuerventil 230 zu einem bestimmten ersten Zeitpunkt angesteuert und die Ansteuerung zu einem zweiten Zeitpunkt zurückgenommen wird. Um eine genaue Drucksteuerung zu erzielen, ist es erforderlich, dass das Mengensteuerventil 230 zum exakt vorberechneten Zeitpunkt öffnet und/oder schließt. Dabei ist es von Vorteil, wenn die Verzögerungszeit zwischen der Ansteuerung des Mengensteuerventils 230 und der tatsächlichen Reaktion, d. h. dem Öffnen und/oder Schließen des Mengensteuerventils 230, möglichst klein ist.

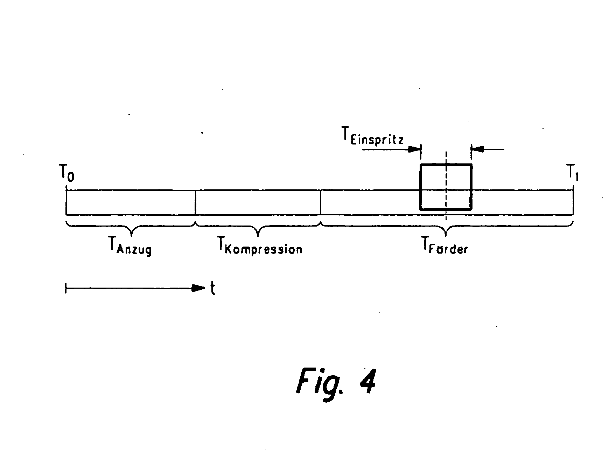

Bei einer bedarfsgerechten Drucksteuerung fördert die Hochdruckpumpe 220 die Kraftstoffmasse, die für die Aufrechterhaltung des Druckes P im Druckspeicher 200 notwendig ist. Die Dauer der Ansteuerung T_{gesamt} des Mengensteuerventils 230 setzt sich aus der Anzugsdauer des T_{Anzug} des Mengensteuerventils, der Kompressionsdauer T_{Kompression} des Mengensteuerventils und T_{Förder} der Dauer der Förderphase des Mengensteuerventils 230 zusammen. Siehe dazu auch nachfolgend Fig. 4 noch im Detail eingegangen.

Wenn nun die Dauer der Förderphase T_{Förder} des Mengensteuerventils 230 nicht mit den Einspritzzeitpunkten und Dauern der Injektoren 100-1 bis 100-6 abgestimmt, dann besteht die Möglichkeit, dass während eines Arbeitsspiels der Brennkraftmaschine der Druck P im Common-Rail 200 verhältnismäßig großen Änderungen unterliegt, so dass die verschiedenen Injektoren 100-1 bis 100-6, welche ja zu unterschiedlichen Zeitpunkten innerhalb eines Arbeitspiels Brennstoff einspritzen, mit verschiedenen Drücken p aus dem Common-Rail 200 beaufschlagt werden. Da die Einspritzmenge der Injektoren 100 neben der Einspritzdauer T_{Einspritz} auch in hohem Maße von dem Druck p im Common-Rail 200 abhängt, unterscheiden sich infolgedessen auch die von den verschiedenen Injektoren 100 eingespritzten Kraftstoffmengen innerhalb eines Arbeitsspiels. Als Arbeitsspiel wird im Zusammenhang mit der Erfindung ein Kurbelwinkel der Kurbelwelle der nicht dargestellten Brennkraftmaschine von 720 ° verstanden. Innerhalb eines solchen Arbeitsspiels durchläuft jeder Zylinder die vier Takte eines 4-Takt-Motors.

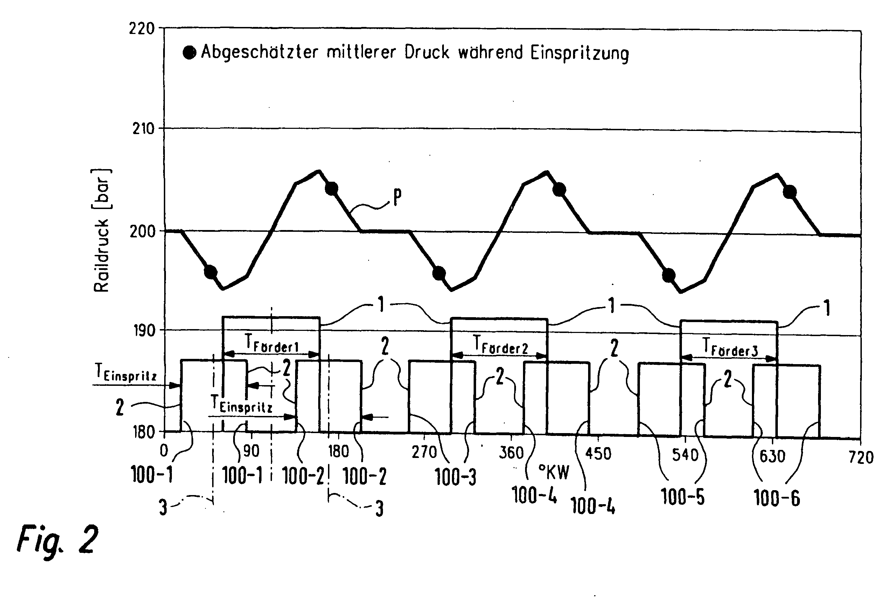

In Fig. 2 ist eine solche Situation dargestellt, bei der die Dauer der Förderphase und die Einspritzdauer T_{Einspritz} nicht aufeinander abgestimmt sind. Eine erste Linie 1 zeigt den Zustand der Kraftstoffhochdruckpumpe 220 an. Wenn die Linie 1 von 0 verschieden ist, fördert die Kraftstoffhochdruckpumpe 220. Die Förderdauer der Hochdruckpumpe 220 ist in Fig. 2 mit T_{Förder} bezeichnet. Aus der Fig. 2 wird deutlich, dass die Förderung in drei Förderphasen T_{Förder1}, T_{Förder2} und T_{Förder3} innerhalb eines Arbeitsspiels aufgeteilt wurde. Dadurch wird eine Vergleichmäßigung des Drucks P im Common-Rail 200 erreicht. Der Verlauf des Drucks P im Common-Rail 200 während eines Arbeitsspiels ist in Fig. 2 durch die mit P gekennzeichnete Linie dargestellt.

Aus der Fig. 2 ist deutlich zu erkennen, dass zu Beginn einer Förderphase der Druck p im Common-Rail 200 ein Minimum hat und am Ende einer Förderphase sein Maximum erreicht. In Fig. 2 sind durch die Linien 2 und 3 die Dauer T_{Einspritz} und die zeitlich Mitte der Einspritzungen der verschiedenen Injektoren 100-1 bis 100-6 innerhalb eines Arbeitsspiels teilweise dargestellt. Wenn, wie in Fig. 2 dargestellt, die zeitliche Mitte (siehe Linie 3) der Einspritzdauer T_{Einspritz} etwa mit dem Beginn der Förderphase T_{Förder1} zusammenfällt, bedeutet dies, dass der mittlere Druck p im Common-Rail während der Einspritzung dieses ersten Injektors 100-1 sehr niedrig ist. Im Gegensatz dazu ist der Druck p während einer Einspritzung eines weiteren Injektors 100-2, deren zeitliche Mitte am Ende der Förderphase T_{Förder1} liegt, maximal. In Folge dessen ist trotz gleicher Einspritzdauern T_{Einspritz} und sonst gleichen Randbedingungen die vom Injektor 100-1 eingespritzte Kraftstoffmenge deutlich kleiner als die vom Injektor 100-2 eingespritzte Kraftstoffmenge. Ursache hierfür ist der unterschiedliche mittlere Druck p im Common-Rail 200 während der Einspritzdauer. Der dritte Injektor 100-3 hat etwa den gleichen mittleren Druck p im Common-Rail wie der erste Injektor 100-1 während der Einspritzung zur Verfügung. Entsprechendes gilt für die Injektoren 100-4 und 100-2 usw..

Es hat sich gezeigt, dass bei einer Ansteuerung der Hochdruckpumpe 220 und der Injektoren 100 gemäß der Darstellung von Fig. 2 sich Unterschiede in der Einspritzmenge von etwa 3 % einstellen, die im wesentlichen auf die unterschiedlichen mittleren Drücke p während der Einspritzdauer T_{Einspritz} zurückzuführen sind.

In erfindungsgemäßer Weise wird nun vorgeschlagen, die Einspritzphasen T_{Einspritz} der Injektoren oder eines Injektors 100-1 mit der oder den Förderphase T_{Förder} der Hochdruckpumpe 220 abzustimmen. Dadurch können die Unterschiede zwischen den Einspritzmengen der Injektoren 100-1 bis 100-6 innerhalb eines Arbeitsspiels deutlich verringert werden.

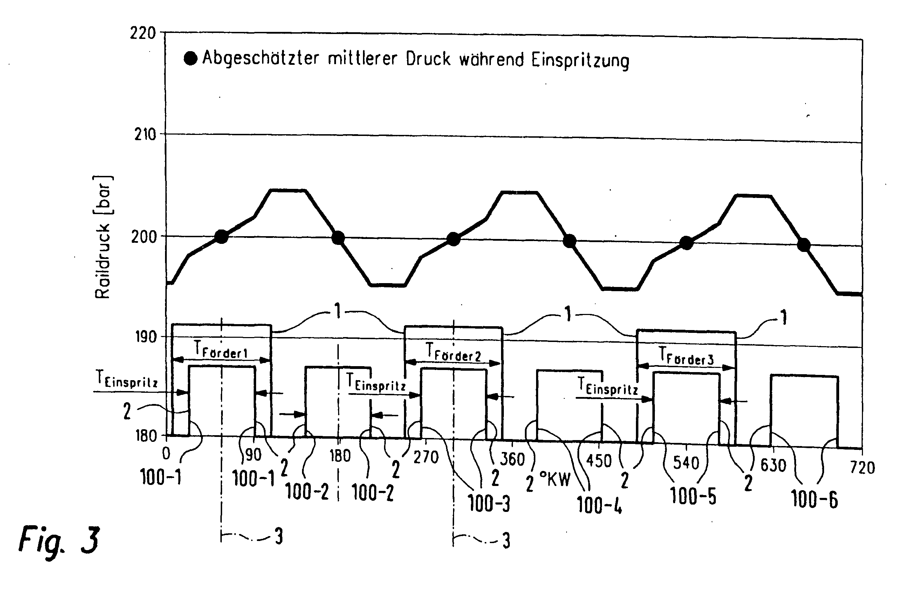

In Fig. 3 sind die Förderphasen T_{Förder1}, T_{Förder2} und T_{Förder3} so gelegt, dass ihre zeitliche Mitte, angedeutet durch die Linie 3, mit der Mitte der Einspritzphasen T_{Einspritz} von mindestens einem Injektor, hier 100-1, 100,3 und 100-5, zusammenfällt. Dadurch wird erreicht, dass der Injektor 100-1 während seiner Einspritzung mit einem Druck p beaufschlagt wird, der im Wesentlichen dem mittleren Druck im Common-Rail 200 während eines Arbeitspiels entspricht.

Die Injektoren 100-2, 100-4 und 100-6 spritzen zwischen den Förderphasen T_{Förder1}, T_{Förder2} und T_{Förder3} ein. Dabei herrscht etwa der gleiche mittlere Druck p im Common-rail wie bei der Einspritzung des Injektors 100-1. Verglichen mit der Situation in der Fig. 2 wird der Injektor 100-2 mit einem deutlich geringeren mittleren Druck p während der Einspritzung beaufschlagt.

Entsprechendes gilt für die Injektoren 100-3 bis 100-6. Der Unterschied zwischen dem mittleren Druck bei der Einspritzung zwischen den Injektoren 100-1 bis 100-6 ist bei der erfindungsgemäßen Abstimmung der Förderphasen T_{Förder1}, T_{Förder2} und T_{Förder3} auf die Einspritzphasen T_{Einspritz} deutlich geringer als dies zwischen den Injektoren 100-1 und 100-2 bei dem Beispiel aus Fig. 2 der Fall ist.

Es hat sich anhand konkreter Messungen an realen Brennkraftmaschinen herausgestellt, dass die aus den unterschiedlichen mittleren Drücken während der Einspritzung resultierenden unterschiedlich eingespritzten Kraftstoffmengen anstatt 3 %, wie im Fall der Fig. 2, auf etwa 1,8 % reduziert werden konnten. Daraus ergeben sich erhebliche Verbesserungen des Gleichlaufs der Brennkraftmaschine und des Emissionsverhaltens der Brennkraftmaschine. Für den Fall, dass sich eine Förderung der Hochdruckpumpe 220 zeitlich über die Einspritzdauer von zwei Injektoren 100 erstreckt, kann die Mengenstreuung theoretisch sogar auf null reduziert werden.

Prinzipiell wäre es natürlich wünschenswert, wenn die Zahl der Förderphasen T_{Förder} der Zahl der Einspritzungen innerhalb eines Arbeitsspiels entspricht. Dann hätte jeder Injektor den gleichen mittleren Druck während seiner Einspritzung zur Verfügung. Allerdings ist dies in Großserienanwendungen nicht realisierbar, da die erforderlichen extrem kurzen Schaltzeiten des Mengensteuerventils 230 nicht erreicht werden können. Es hat sich jedoch in der Praxis als hilfreich und ausreichend erwiesen, wenn die Förderung der Hochdruckpumpe 220 innerhalb eines Arbeitsspiels auf zwei oder drei Förderphasen T_{Förder} aufgeteilt werden. Dabei ist auch die Zylinderanzahl der Brennkraftmaschine und damit die Zahl der Injektoren zu berücksichtigen.

Wenn bspw. eine 5-Zylinder-Brennkraftmaschine nach dem erfindungsgemäßen Verfahren betrieben werden soll, kann es sinnvoll sein, wenn der Abstand der Förderphasen innerhalb eines Arbeitsspiels nicht genau 360 ° Kurbelwinkel beträgt, sondern in Abstimmung mit den ungleichen Zündabständen der Brennkraftmaschine die Förderphasen so aufgeteilt werden, dass im Ergebnis die Unterschiede beim mittleren Druck P während der Einspritzung der verschiedenen Injektoren 100-1 bis 100-5 der 5-Zylinder-Brennkraftmaschine (nicht dargestellt) minimal werden.

In Fig. 4 ist die Ansteuerdauer eines Mengensteuerventils 230 schematisch dargestellt. Die Ansteuerdauer beginnt zum Zeitpunkt T₀ und endet zum Zeitpunkt T₁. Diese Ansteuerdauer muss in drei Phasen unterteilt werden: Die Anzugsdauer T_{Anzug}, daran anschließend eine Kompressionsdäuer T_{Kompression} und eine Dauer der Förderphase T_{Förder} des Mengensteuerventils 230. Die Anzugdauer ist durch das Ansprechverhalten des Mengensteuerventils 230 vorgegeben. Während der Kompressionsdauer wird der in der Hochdruckpumpe 220 befindliche Kraftstoff komprimiert bis er den Druck des Common-Rails 200 erreicht hat. Daran anschließend folgt die Förderphase T_{Förder} während der die Hochdruckpumpe 220 Kraftstoff in den Common-Rail 200 fördert. Erfindungsgemäß ist es vorteilhaft, wenn die Dauer der Förderphase T_{Förder} mit der Einspritzdauer so abgestimmt wird, dass die Mitte der Förderphase T_{Förder} mit der Mitte der Einspritzdauer T_{Einspritz} zusammenfällt.

## Patentansprüche

1. Verfahren zum Betreiben eines Kraftstoffeinspritzsystems für Brennkraftmaschinen mit einer Hochdruckpumpe (220) mit einem Mengensteuerventil (230) zur Steuerung der Fördermenge der Hochdruckpumpe (220), mit einem Common-Rail (200) mit mindestens zwei Einspritzventilen (100) und mit einem Steuergerät (160) zur Ansteuerung des Mengensteuerventils (230) und der Einspritzventile (100), **gekennzeichnet durch** folgende Verfahrensschritte:
- Berechnen des Beginns und des Endes einer Einspritzung in Abhängigkeit des Betriebszustands der Brennkraftmaschine und der Lastanforderung,
- Berechnen der Dauer (T_{Förder}) einer Förderphase der Hochdruckpumpe (220),
- Ansteuern des Mengensteuerventils (230) so, dass die Förderphase der Hochdruckpumpe (220) symmetrisch zu Beginn und Ende der Einspritzung angeordnet ist.

2. Verfahren nach Anspruch 1, **dadurch gekennzeichnet, dass** die Dauer (T_{Förder}) der Förderphase aus der Dauer (T₁ - T₀) der Bestromung des Mengensteuerventils (230) abzüglich der Anzugsdauer (T_{Anzug}) des Mengensteuerventils (230) und der Dauer (T_{Kompression}) der Kompressionsphase der Hochdruckpumpe (220) ermittelt wird.

3. Verfahren nach Anspruch 2, **dadurch gekennzeichnet, dass** die Anzugsdauer (T_{Anzug}) des Mengensteuerventils (230) und die Dauer (T_{Kompression}) der Kompressionsphase der Hochdruckpumpe (220) in Abhängigkeit der Drehzahl der Brennkraftmaschine und des Druck im Common-Rail (200) aus einem Kennfeld ausgelesen werden.

4. Verfahren nach einem der vorhergehenden Ansprüche, **dadurch gekennzeichnet, dass** die Hochdruckpumpe (220) mehrere Förderphasen (T_{Förder}) während eines Arbeitsspiels (720° KW) eines Zylinders der Brennkraftmaschine hat, und dass die mehreren Förderphasen (T_{Forder}) um einen oder mehrere Zündabstände der Brennkraftmaschine zueinander versetzt sind.

5. Verfahren nach einem der vorhergehenden Ansprüche, **dadurch gekennzeichnet, dass** die Hochdruckpumpe (220) mehrere Förderphasen (T_{Förder}) während eines Arbeitsspiels der Brennkraftmaschine hat, und dass die mehreren Förderphasen (T_{Förder}) einen gleichmäßigen Abstand voneinander haben.

6. Steuergerät für une Brennkraftmaschine, **dadurch gekennzeichnet, dass** es ein Verfahren nach einem der Ansprüche 1 bis 5 durchführt.

7. Computerprogramm, **dadurch gekennzeichnet, dass** es ein Verfahren nach einem der Ansprüche 1 bis 5 ausführt, wenn es auf einem Steuergerät gemäß Anspruch 6 abläuft.

8. Computerprogramm nach Anspruch 7, **dadurch gekennzeichnet, dass** es auf einen Speichermedium abspeicherbar ist.

## Claims

1. Method for operating a fuel injection system for internal combustion engines, with a high-pressure pump (220) having a quantity control valve (230) for controlling the feed quantity of the high-pressure pump (220), with a common rail (200) having at least two injection valves (100), and with a control apparatus (160) for activating the quantity control valve (230) and the injection valves (100), **characterized by** the following method steps:
- calculation of the start and end of an injection as a function of the operating state of the internal combustion engine and of the load requirement,
- calculation of the duration (T_{feed}) of a feed phase of the high-pressure pump (220),
- activation of the quantity control valve (230) in such a way that the feed phase of the high-pressure pump (220) is arranged symmetrically with respect to the start and end of the injection.

2. Method according to Claim 1, **characterized in that** the duration (T_{feed}) of the feed phase is determined from the duration (T₁ - T₀) of the application of current to the quantity control valve (230), minus the trip duration (Tₜᵣᵢₚ) of the quantity control valve (230) and the duration (T_{compression}) of the compression phase of the high-pressure pump (220).

3. Method according to Claim 2, **characterized in that** the trip duration (Tₜᵣᵢₚ) of the quantity control valve (230) and the duration (T_{compression}) of the compression phase of the high-pressure pump (220) are read out from a characteristic map as a function of the rotational speed of the internal combustion engine and of the pressure in the common rail (200).

4. Method according to one of the preceding claims, **characterized in that** the high-pressure pump (220) has a plurality of feed phases (T_{feed}) during a work cycle (720° CA) of a cylinder of the internal combustion engine, and **in that** the plurality of feed phases (T_{feed}) are offset with respect to one another by the amount of one or more ignition intervals of the internal combustion engine.

5. Method according to one of the preceding claims, **characterized in that** the high-pressure pump (220) has a plurality of feed phases (T_{feed}) during a work cycle of the internal combustion engine, and **in that** the plurality of feed phases (T_{feed}) have a uniform spacing one from the other.

6. Control apparatus for an internal combustion engine, **characterized in that** it carries out a method according to one of Claims 1 to 5.

7. Computer program, **characterized in that** it executes a method according to one of Claims 1 to 5 when it runs on a control apparatus according to Claim 6.

8. Computer program according to Claim 7, **characterized in that** it can be stored on a storage medium.

## Revendications

1. Procédé pour faire fonctionner un système d'injection de carburant pour moteurs à combustion interne, comprenant une pompe haute pression (220) avec une soupape de commande de volume (230) pour commander le débit de la pompe haute pression (220), comprenant une rampe commune (200) avec au moins deux injecteurs (100) et comprenant un appareil de commande (160) pour commander la soupape de commande de volume (230) et les injecteurs (100),
**caractérisé par** les étapes de procédé suivantes :
- calcul du début et de la fin d'une injection en fonction de l'état de fonctionnement du moteur à combustion interne et de la demande de charge,
- calcul de la durée (T_{refoulement}) d'une phase de refoulement de la pompe haute pression (220),
- commande de la soupape de commande de volume (230) de telle sorte que la phase de refoulement de la pompe haute pression (220) soit disposée symétriquement au début et à la fin de l'injection.

2. Procédé selon la revendication 1,
**caractérisé en ce que**
la durée (T_{refoulement}) de la phase de refoulement est déterminée à partir de la durée (T₁ - T₀) de l'écoulement de la soupape de commande de volume (230) déduction faite de la durée de retenue (Tᵣₑₜₑₙᵤₑ) de la soupape de commande de volume (230) et de la durée (T_{compression}) de la phase de compression de la pompe haute pression (220).

3. Procédé selon la revendication 2,
**caractérisé en ce que**
la durée de retenue (Tᵣₑₜₑₙᵤₑ) de la soupape de commande de volume (230) et la durée (T_{compression}) de la phase de compression de la pompe haute pression (220) sont lues à partir d'un paramètre, en fonction de la vitesse de rotation du moteur à combustion interne et de la pression régnant dans la rampe commune (200).

4. Procédé selon l'une des revendications précédentes,
**caractérisé en ce que**
la pompe haute pression (220) présente plusieurs phases de refoulement (T_{refoulement}) pendant un cycle de travail (720° KW) d'un cylindre du moteur à combustion interne, et ces différentes phases de refoulement (T_{refoulement}) sont décalées les unes par rapport aux autres sur un ou plusieurs intervalles d'allumage du moteur à combustion interne.

5. Procédé selon l'une des revendications précédentes,
**caractérisé en ce que**
la pompe haute pression (220) présente plusieurs phases de refoulement (T_{refoulement}) pendant un cycle de travail du moteur à combustion interne, et ces différentes phases de refoulement (T_{refoulement}) présentent un intervalle régulier les unes par rapport aux autres.

6. Appareil de commande pour un moteur à combustion interne,
**caractérisé en ce qu'**
il met en oeuvre un procédé selon l'une des revendications 1 à 5.

7. Programme informatique,
**caractérisé en ce qu'**
il exécute un procédé selon l'une des revendications 1 à 5 lorsqu'il est utilisé sur un appareil de commande selon la revendication 6.

8. Programme informatique selon la revendication 7,
**caractérisé en ce qu'**
il peut être enregistré sur un support de mémoire.
